(19) Europäisches Patentamt / European Patent Office / Office européen des brevets

(11) **EP 4 199 331 B1**

(12) **EUROPEAN PATENT SPECIFICATION**

(45) Date of publication and mention
of the grant of the patent:
**29.01.2025 Bulletin 2025/05**

(21) Application number: **21214714.4**

(22) Date of filing: **15.12.2021**

(51) International Patent Classification (IPC):
$H02M\ 1/00^{(2006.01)}$    $H02M\ 3/07^{(2006.01)}$
$H05B\ 45/3725^{(2020.01)}$    $H05B\ 45/335^{(2020.01)}$
$H02M\ 3/156^{(2006.01)}$

(52) Cooperative Patent Classification (CPC):
**H05B 45/3725; H02M 1/0095; H02M 3/07;
H02M 3/156; H05B 45/335**

(54) **HYBRID SWITCHED-MODE CONVERTER, METHOD OF OPERATING THE SAME, AND LIGHTING SYSTEM**

HYBRIDER SCHALTWANDLER, VERFAHREN ZU DESSEN BETRIEB UND BELEUCHTUNGSSYSTEM

CONVERTISSEUR HYBRIDE EN MODE COMMUTÉ, SON PROCÉDÉ DE FONCTIONNEMENT ET SYSTÈME D'ÉCLAIRAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.06.2023 Bulletin 2023/25**

(73) Proprietor: **Tridonic GmbH & Co KG
6851 Dornbirn (AT)**

(72) Inventor: **Wörz, Philipp
6850 Dornbirn (AT)**

(74) Representative: **Rupp, Christian
Mitscherlich PartmbB
Patent- und Rechtsanwälte
Karlstraße 7
80333 München (DE)**

(56) References cited:
• JUAN C CASTELLANOS ET AL: "Dimmable integrated CMOS LED driver based on a resonant DC/DC hybrid-switched capacitor converter", INTERNATIONAL JOURNAL OF CIRCUIT THEORY AND APPLICATIONS, JOHN WILEY & SONS, INC, HOBOKEN, USA, vol. 46, no. 8, 21 June 2018 (2018-06-21), pages 1485 - 1502, XP071448710, ISSN: 0098-9886, DOI: 10.1002/ CTA.2512

## Description

## Technical Field

The present disclosure relates to energy supply in lighting systems, and in particular to a hybrid switched-mode converter, a method of operating such converter, and a lighting system comprising a number of such converters.

## Background Art

Hybrid switched-mode converters using both capacitors and inductors as temporary energy reservoirs represent a highly power-efficient and cost-efficient energy supply alternative for lighting systems, and in particular for bus-based lighting systems. They require inductive components of smaller form factor and may thus enable monolithic integration.

When operated by frequency modulation, however, a modulation frequency may become audible for relatively low light outputs (i.e., extensive dimming), such that not the full range of light output is available for dimming.

The document JUAN C CASTELLANOS ET AL: "Dimmable integrated CMOS LED driver based on a resonant DC/DC hybrid-switched capacitor converter", INTERNATIONAL JOURNAL OF CIRCUIT THEORY AND APPLICATIONS, JOHN WILEY & SONS, INC, HOBOKEN, USA, vol. 46, no. 8, 21 June 2018 (2018-06-21), pages 1485-1502, XP071448710, ISSN: 0098-9886, DOI:10.1002/CTA.2512 discloses an on-chip LED driver based on a DC/DC resonant hybrid-switched capacitor converter operating in the MHz range with and without output capacitor.

## Summary

In view of the above-mentioned limitations, the present disclosure aims to provide power-efficient and cost-efficient conversion offering dimming across the full range of light output (i.e., down to 1% of a full light output).

The objective is achieved by the embodiments as defined by the appended independent claims. Preferred embodiments are set forth in the dependent claims and in the following description and drawings.

A first aspect of the present disclosure relates to a hybrid switched-mode converter for an LED load. The converter comprises a first decoupling element, a second decoupling element, a third decoupling element and a fourth decoupling element connected in series across an input port of the converter connectable to a DC power source. The converter further comprises a first capacitive storage element connected in parallel to the series connection of the second decoupling element and the third decoupling element. The converter further comprises an inductive storage element and a second capacitive storage element connected in parallel to the series connection of the third decoupling element and the fourth decoupling element. The second capacitive storage element is connected in parallel to an output port of the converter connectable to the LED load. The converter further comprises a control logic being configured to: alternately open the first decoupling element and the second decoupling element in accordance with a modulation frequency with an intermediate time lag; preserve a duration of the time lag in a first dimming range of the LED load; and modulate the duration of the time lag in a second dimming range of the LED load.

The first decoupling element and the second decoupling element may respectively comprise an electronic switch.

The third decoupling element and the fourth decoupling element may respectively comprise an electronic switch.

The control logic may further be configured to open the third decoupling element and/or the fourth decoupling element in dependence of respective opening states of the first decoupling element and the second decoupling element.

The third decoupling element and the fourth decoupling element may respectively comprise a diode; and the diodes respectively may be arranged to prevent shorting the DC voltage source.

The first dimming range may extend from a full light output of the LED load to a reduced light output of the LED load achieved at a minimum modulation frequency.

The minimum modulation frequency may comprise a frequency being inaudible to a human ear.

The minimum modulation frequency may comprise 30 kHz, more preferably 25 kHz, and most preferably 20 kHz.

The second dimming range may extend from the reduced light output of the LED load to a minimum light output of the LED load achieved at a minimum duration of the time lag.

The minimum light output of the LED load may comprise 1% of the full light output of the LED load.

The control logic may form part of an integrated circuit, preferably a monolithically integrated circuit.

The control logic may further be configured to operate the first decoupling element in an opened state in first, second and third phases of an operating cycle of the converter, and in a closed state in a fourth phase of the operating cycle. The control logic may further be configured to operate the second decoupling element in an opened state in the first, third and fourth phases of the operating cycle, and in a closed state in the second phase of the operating cycle. A respective duration of the first and third phases may correspond to the intermediate time lag.

A second aspect of the present disclosure relates to a lighting system, comprising a lighting bus; a DC power source being configured to supply DC power to the lighting bus; and a number of hybrid switched-mode converters of the first aspect or any of its implementations. The respective converter is configured to supply DC power to a respective LED load off the lighting bus.

A third aspect of the present disclosure relates to a method of operating a hybrid switched-mode converter of the first aspect or any of its implementations. The method comprises: alternatingly opening the first decoupling element and the second decoupling element with an intermediate time lag in accordance with a modulation frequency; preserving a duration of the time lag in a first dimming range of the LED load; and modulating the duration of the time lag in a second dimming range of the LED load.

**Advantageous Effects**

The present disclosure provides hybrid switched-mode conversion which enables dimming across the full range of light output by accompanying frequency modulation with an additional form of modulation for relatively low light outputs (i.e., extensive dimming). The additional modulation further reduces a duration of an intermediate time lag between alternating decoupling actions of serially connected decoupling elements (i.e., switches).

During the intermediate time lag, both of the serially connected decoupling elements are conductive. Owing to the overlapping operation, the intermediate time lag may also be termed overlap time or overlap period. During said time lag, a current may flow from a supply side through the serially connected decoupling elements to a load side. Decreasing a (modulation) frequency of decoupling (switching) actions reduces an average current provided to the load side. When a further decrease of the (modulation) frequency would become audible, the frequency is fixated and the average current flowing through the series connection and supplying the load side is further reduced by shortening the duration of the intermediate time lag.

Therefore, the additional duration modulation of the overlap time of the serially connected decoupling elements enables dimming down to a lower end of the full range of light output.

The technical effects and advantages described above in relation with the hybrid switched-mode conversion equally apply to the converter itself, to the method of operating the same having corresponding features, and to the lighting system comprising such converters.

**Brief Description of Drawings**

The above-described aspects and implementations will now be explained with reference to the accompanying drawings, in which the same or similar reference numerals designate the same or similar elements.

The features of these aspects and implementations may be combined with each other unless specifically stated otherwise.

The drawings are to be regarded as being schematic representations, and elements illustrated in the drawings are not necessarily shown to scale. Rather, the various elements are represented such that their function and general purpose become apparent to those skilled in the art.

FIG. 1      illustrates a hybrid switched-mode step-down converter in accordance with the present disclosure;

FIGs. 2 - 5      illustrate operation phases of the converter of FIG. 1;

FIG. 6      illustrates waveforms of the operation phases of the converter of FIG. 1;

FIG. 7      illustrates a modulation frequency of the converter of FIG. 1 as a function of light output;

FIG. 8      illustrates a duration of the first and third operating phases of the converter of FIG. 1 as a function of light output;

FIG. 9      illustrates a lighting system in accordance with the present disclosure; and

FIG. 10      illustrates a flow chart of a method in accordance with the present disclosure of operating the converter of FIG. 1.

**Detailed Descriptions of Drawings**

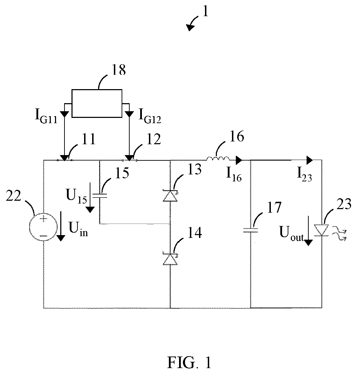

FIG. 1 illustrates a hybrid switched-mode step-down converter 1 in accordance with the present disclosure.

As indicated in FIG. 1, the converter 1 is suitable for an LED load 23 connectable to an output port of the converter 1.

The converter 1 comprises a first decoupling element 11, a second decoupling element 12, a third decoupling element 13 and a fourth decoupling element 14 connected in series across an input port of the converter 1 connectable to a DC power source 22. A voltage supplied by the DC power source 22 is identified as $U_{22}$.

The converter 1 further comprises a control logic 18 configured to operate the respective decoupling element 11-14 provided that this is warranted, as will be explained below in more detail. The control logic 18 may form part of an integrated circuit, preferably a monolithically integrated circuit.

The first decoupling element 11 and the second decoupling element 12 may respectively comprise an electronic switch, as shown in FIG. 1. As such, the control logic 18 is configured to operate the respective decoupling element 11, 12. Drive currents of the respective decoupling element 11-12 are identified as $I_{G11}$ and $I_{G12}$,

respectively.

The third decoupling element 13 and the fourth decoupling element 14 may respectively comprise a diode, as shown in FIG. 1, in which case the control logic 18 is not configured to operate the respective decoupling element 13, 14. The diodes arranged to prevent shorting the DC voltage source (i.e., the cathodes oriented towards a high-side potential, and the anodes oriented towards a low-side potential).

Alternatively, the third decoupling element 13 and the fourth decoupling element 14 may also comprise respective electronic switches, in which case the control logic 18 may further be configured to operate the respective decoupling element 13, 14. More specifically, the control logic 18 may be configured to open the third decoupling element 13 and/or the fourth decoupling element 14 in dependence of respective opening states of the first decoupling element 11 and the second decoupling element 12. In other words, the third decoupling element 13 and the fourth decoupling element 14 may be operated in accordance with a well-known synchronous operation for reduction of switching loss.

The converter 1 further comprises a first capacitive storage element 15 (flying capacitor) connected in parallel to the series connection of the second decoupling element 12 and the third decoupling element 13. A voltage across the first capacitive storage element 15 is identified as $U_{15}$.

The converter 1 further comprises an inductive storage element 16 (having an inductance of $L_{16}$) and a second capacitive storage element 17 (smoothing capacitor) connected in parallel to the series connection of the third decoupling element 13 and the fourth decoupling element 14. The second capacitive storage element 17 is connected in parallel to the output port of the converter 1 connectable to the LED load 23. A current of the inductive storage element 16 is identified as $I_{16}$, and a load current of the LED load 23 is identified as $I_{23}$, and a voltage across the LED load 23 is identified as $U_{23}$.

The control logic 18 is configured to alternatingly open the first decoupling element 11 and the second decoupling element 12 in accordance with a modulation frequency with an intermediate time lag, wherein in a first dimming range of the LED load 23, the control logic 18 is configured to preserve a duration of the time lag; and in a second dimming range of the LED load 23, the control logic 18 is configured to modulate the duration of the time lag.

A more detailed explanation of the operation of the hybrid switched-mode converter 1 will be provided next.

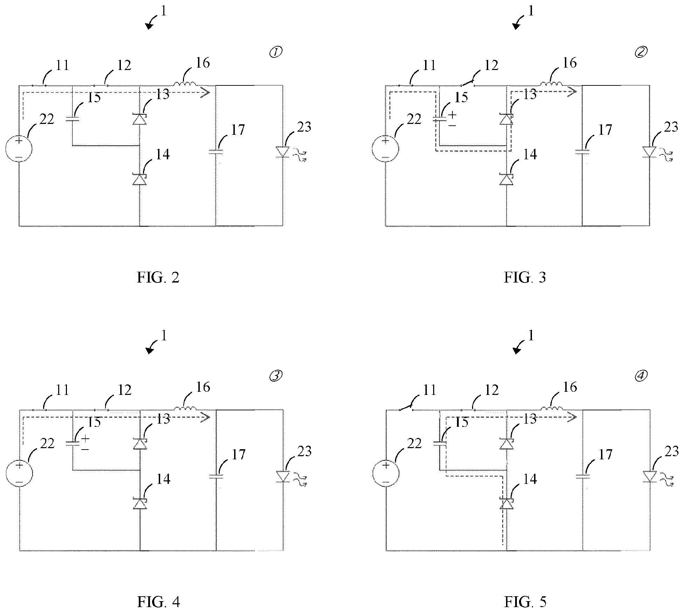

FIGs. 2-5 illustrate operation phases of the converter of FIG. 1.

In a first operation phase depicted in FIG. 2, both the first decoupling element 11 and the second decoupling element 12 are operated in a closed (conducting) state. The DC power source 22 directly charges the inductive storage element 16. The current $I_{16}$ of the

inductive storage element 16 therefore increases almost linearly over time:

$$I_{16} = \frac{(U_{22} - U_{23})}{L_{16}} t$$

In a second operation phase depicted in FIG. 3, the first decoupling element 11 is maintained in the closed (conducting) state, and the second decoupling element 12 is operated in an open (non-conducting) state. The DC power source 22 now directly charges the first capacitive storage element 15, and a resonant current between the first capacitive storage element 15 and the inductive storage element 16 emerges until the latter is charged. The current $I_{16}$ of the inductive storage element 16 decreases until it reaches zero. A maximum drop of the voltage $U_{15}$ across the first capacitive storage element 15 is clamped by the fourth decoupling element 14. So when increasing a capacitance of the first capacitive storage element 15, the current $I_{16}$ of the inductive storage element 16 increases as long as the voltage $U_{15}$ across the first capacitive storage element 15 is smaller as or equal to $U_{22}$.

In a third operation phase depicted in FIG. 4, the first decoupling element 11 is maintained in the closed (conducting) state and the second decoupling element 12 is operated in the closed (conducting) state. That is to say, with reference to the operating states of the first and second decoupling elements 11, 12, the third operation phase corresponds to the first operation phase, but the state of charge of the first capacitive storage element 15 has changed. Again, the DC power source 22 directly charges the inductive storage element 16.

In a fourth operation phase depicted in FIG. 5, the first decoupling element 11 is operated in the open (non-conducting) state, and the second decoupling element 12 is maintained in the closed (conducting) state state. Therefore, the first capacitive storage element 15 is discharged via the inductive storage element 16, and the converter 1 completes the quasi-resonant cycle started in the second operation phase.

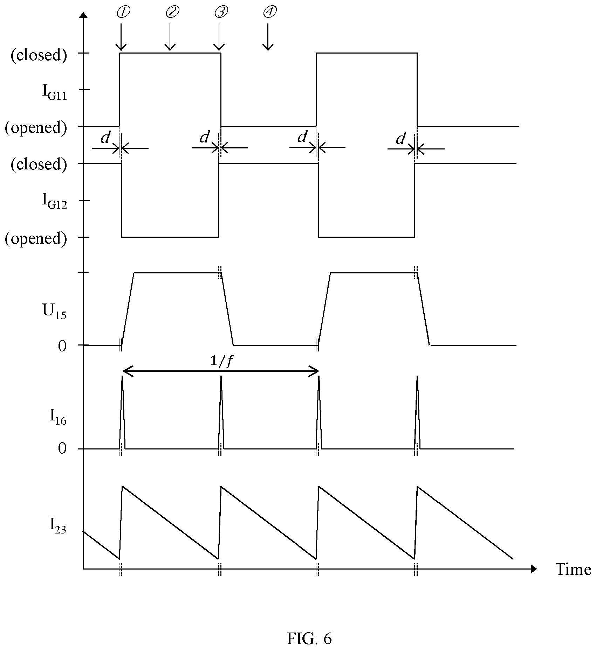

FIG. 6 illustrates waveforms of the operation phases of the converter of FIG. 1.

In the first operation phase indicated in FIG. 6 as (1), both the first decoupling element 11 and the second decoupling element 12 are operated in a closed (conducting) state (i.e., the drive currents $I_{G11}$ and $I_{G12}$ are non-zero). The DC power source 22 directly charges the inductive storage element 16. The current $I_{16}$ of the inductive storage element 16 therefore increases almost linearly over time (note the sharply rising edge of current $I_{16}$).

In the second operation phase indicated in FIG. 6 as (2), the first decoupling element 11 is maintained in the closed (conducting) state (the drive current $I_{G11}$ remains non-zero), and the second decoupling element 12 is operated in an open (non-conducting) state (the drive current $I_{G12}$ becomes zero). The DC power source 22 now directly charges the first capacitive storage element 15 (note the rising edge of voltage $U_{15}$), and a resonant current between the first capacitive storage element 15 and the inductive storage element 16 emerges until the former is charged. The current $I_{16}$ of the inductive storage element 16 decreases until it reaches zero (note the sharply falling edge of current $I_{16}$).

In the third operation phase indicated in FIG. 6 as (3), the first decoupling element 11 is maintained in the closed (conducting) state (the drive current $I_{G11}$ remains non-zero) and the second decoupling element 12 is operated in the closed (conducting) state (the drive current $I_{G12}$ becomes non-zero). Again, the DC power source 22 directly charges the inductive storage element 16, and the current $I_{16}$ of the inductive storage element 16 increases almost linearly over time (note the sharply rising edge of current $I_{16}$).

In the fourth operation phase indicated in FIG. 6 as (4), the first decoupling element 11 is operated in the open (non-conducting) state (the drive current $I_{G11}$ becomes zero), and the second decoupling element 12 is maintained in the closed (conducting) state (the drive current $I_{G12}$ remains non-zero). Therefore, the first capacitive storage element 15 is discharged (note the falling edge of voltage $U_{15}$) via the inductive storage element 16, and the converter 1 completes the quasi-resonant cycle started in the second operation phase (note the sharply falling edge of current $I_{16}$).

In summary, the control logic 18 is configured to alternatingly open the first decoupling element 11 and the second decoupling element 12 in accordance with the modulation frequency indicated as $f$ in FIG. 6. An average value of the current $I_{23}$ of the LED load may be increased or decreased by increasing or decreasing the modulation frequency. That is to say, the LED load may be dimmed by decreasing the modulation frequency.

When a further decrease of the modulation frequency would become audible, the frequency $f$ may be fixated and the average value of the load current $I_{23}$ may further be reduced by shortening the duration of the intermediate time lag, which is indicated as $d$ in FIG. 6.

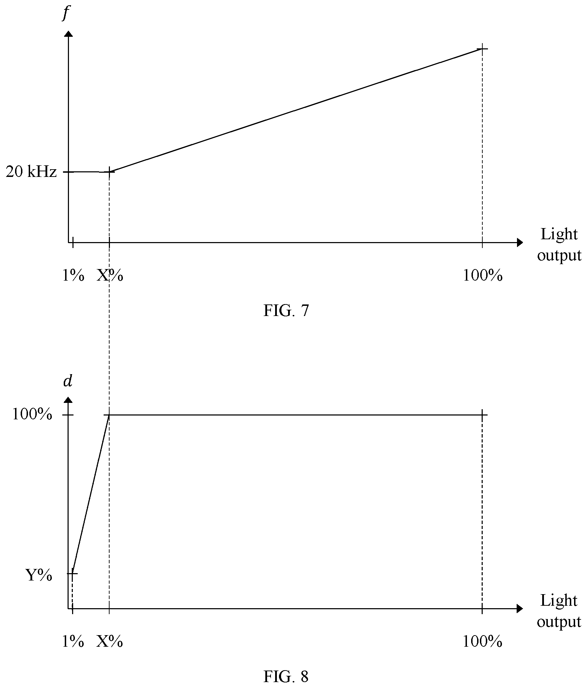

FIG. 7 illustrates a modulation frequency of the converter of FIG. 1 as a function of light output, and FIG. 8 illustrates a duration of the first and third operating phases of the converter of FIG. 1 as a function of light output.

FIG. 7 shows the first and second dimming ranges of the LED load 23. The first (moderate) dimming range may extend from a full i.e., 100% light output of the LED load 23 to a reduced (X%) light output of the LED load 23 achieved at a minimum modulation frequency. In particular, the minimum modulation frequency may comprise a frequency being inaudible to a human ear, such as 30 kHz, more preferably 25 kHz, and most preferably 20 kHz. The second (more extensive) dimming range may extend from the reduced (X%) light output of the LED load 23 to a minimum light output of the LED load 23 achieved at a minimum duration of the time lag. in particular, the minimum light output of the LED load 23 may comprise 1% of the full light output of the LED load 23.

Generally, the control logic 18 is configured to alternatingly open the first decoupling element 11 and the second decoupling element 12 in accordance with the modulation frequency $f$.

In the first (moderate) dimming range, the control logic 18 is configured to perform the frequency modulation and to maintain a duration J of the intermediate time lag between alternating decoupling actions of the serially connected first and second decoupling elements 11, 12 constant. Therefore, the LED load 23 may be dimmed by linearly decreasing the modulation frequency $f$ (see FIG. 7) and keeping the duration of the intermediate time lag d constant (see FIG. 8).

In the second (more extensive) dimming range, the control logic 18 is configured to maintain the frequency modulation constant and to modulate the duration J of the intermediate time lag. As such, the LED load 23 may be dimmed further by linearly decreasing the duration $d$ of the intermediate time lag (see FIG. 8) and keeping the modulation frequency $f$ constant (see FIG. 7).

For example, given certain component values a full (100%) light output of 350mA may be achieved for an intermediate time lag of 562 ns. Upon dimming, the modulation frequency $f$ may be decreased down to a minimum frequency of e.g. 20 kHz, which defines the X% point in FIG. 7. In the example, the lowest reachable LED current $I_{23}$ achievable by frequency modulation amounts to 44 mA (X = 44/350 ≈ 13%).

To achieve even lower light outputs, the duration $d$ of the intermediate time lag requires reduction as well. Upon continued dimming, the duration d may be decreased down to the Y% point in FIG. 8, which corresponds to the minimum (1%) light output of the LED load 23. In the example, this minimum duration amounts to 100 ns (Y% = 100/562 ≈ 18%).

Accordingly, the minimum (1%) light output of the LED load 23 achieved at the minimum duration of the time lag and the minimum modulation frequency amounts to an LED current $I_{23}$ of 3,5 mA (3,5/350 = 1%). That is to say, dimming down to 1% of the full light output of the LED load 23 may be achieved.

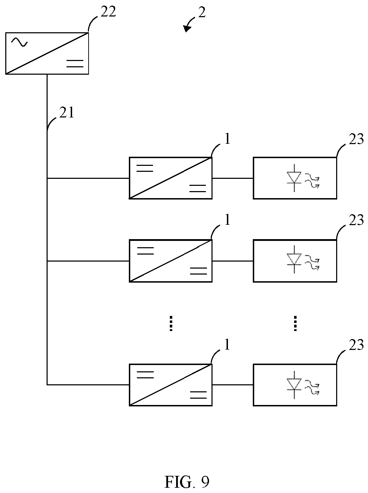

FIG. 9 illustrates a lighting system 2 in accordance with the present disclosure.

The lighting system 2 comprises a lighting bus 21.

The lighting system 2 further comprises a DC power source 22 being configured to supply DC power to the lighting bus 21.

The lighting system 2 further comprises a number of hybrid switched-mode converters 1 of the first aspect or any of its implementations.

The respective converter is connected to the lighting bus 21, and configured to supply DC power to a respective LED load 23 off the lighting bus 21.

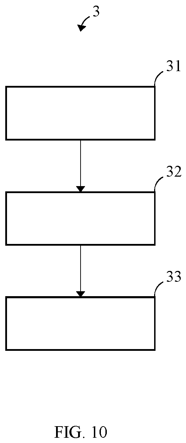

FIG. 10 illustrates a flow chart of a method 3 in accordance with the present disclosure of operating the converter of FIG. 1.

The method 3 is suitable of operating a hybrid switched-mode converter 1 of the first aspect or any of its implementations.

The method 3 comprises a step of alternatingly opening 31 the first decoupling element 11 and the second decoupling element 12 with an intermediate time lag in accordance with a modulation frequency.

The method 3 further comprises a step of preserving 32 a duration of the time lag in a first dimming range of the LED load 23.

The method 3 further comprises a step of modulating 33 the duration of the time lag in a second dimming range of the LED load 23.

**Claims**

1. A hybrid switched-mode converter (1) for an LED load (23), comprising

   a first decoupling element (11), a second decoupling element (12), a third decoupling element (13) and a fourth decoupling element (14) connected in series across an input port of the converter (1) connectable to a DC power source (22);
   a first capacitive storage element (15) connected in parallel to the series connection of the second decoupling element (12) and the third decoupling element (13);
   a series connection comprising an inductive storage element (16) and a second capacitive storage element (17) connected in parallel to the series connection of the third decoupling element (13) and the fourth decoupling element (14), wherein the second capacitive storage element (17) is connected in parallel to an output port of the converter (1) connectable to the LED load (23); and
   a control logic (18) being configured to

   alternatingly open the first decoupling element (11) and the second decoupling element (12) in accordance with a modulation frequency with an intermediate time lag in which the first decoupling element (11) and the second decoupling element (12) are closed;
   and **characterised in that** the control logic is further configured to
   preserve a duration of the time lag and linearly decrease the modulation frequency in a first dimming range of the LED load (23); and
   modulate the duration of the time lag and maintain the frequency modulation constant in a second dimming range of the LED load (23).

2. The converter (1) of claim 1,
   the first decoupling element (11) and the second decoupling element (12) respectively comprising an electronic switch.

3. The converter (1) of claim 1 or claim 2,
   the third decoupling element (13) and the fourth decoupling element (14) respectively comprising an electronic switch.

4. The converter (1) of claim 3,
   the control logic (18) further being configured to open the third decoupling element (13) and/or the fourth decoupling element (14) in dependence of respective opening states of the first decoupling element (11) and the second decoupling element (12).

5. The converter (1) of claim 1 or claim 2,

   the third decoupling element (13) and the fourth decoupling element (14) respectively comprising a diode;
   the diodes respectively being arranged to prevent shorting the DC voltage source.

6. The converter (1) of any one of the preceding claims,
   the first dimming range extending from a full light output of the LED load (23) to a reduced light output of the LED load (23) achieved at a minimum modulation frequency.

7. The converter (1) of claim 6,
   the minimum modulation frequency comprising a frequency being inaudible to a human ear.

8. The converter (1) of claim 7,
   the minimum modulation frequency comprising 30 kHz, more preferably 25 kHz, and most preferably 20 kHz.

9. The converter (1) of any one of the claims 6 to 8,
   the second dimming range extending from the reduced light output of the LED load (23) to a minimum light output of the LED load (23) achieved at a minimum duration of the time lag.

10. The converter (1) of claim 9,
    the minimum light output of the LED load (23) comprising 1% of the full light output of the LED load (23).

11. The converter (1) of any one of the preceding claims,
    the control logic (18) forming part of an integrated circuit, preferably a monolithically integrated circuit.

**12.** The converter (1) of any one of the preceding claims,

the control logic (18) further being configured to operate the first decoupling element (11)

- in a closed state in first, second and third phases of an operating cycle of the converter (1), and
- in an opened state in a fourth phase of the operating cycle;

the control logic (18) further being configured to operate the second decoupling element (12)

- in a closed state in the first, third and fourth phases of the operating cycle, and
- in an opened state in the second phase of the operating cycle;

a respective duration of the first and third phases corresponds to the intermediate time lag.

**13.** A lighting system (2), comprising

a lighting bus (21);
a DC power source (22) being configured to supply DC power to the lighting bus (21); and
a number of hybrid switched-mode converters (1) of any one of the claims 1 to 12, each respective hybrid switched-mode converter (1) being configured to supply DC power to a respective LED load (23) off the lighting bus (21).

**14.** A method (3) of operating a hybrid switched-mode converter (1) of any one of the claims 1 to 12, the method (3) comprising

- alternatingly opening (31) the first decoupling element (11) and the second decoupling element (12) with an intermediate time lag: in which the first decoupling element (11) and the second decoupling element (12) are closed in accordance with a modulation frequency;
**characterised by**
- preserving (32) a duration of the time lag and linearly decrease the modulation frequency in a first dimming range of the LED load (23); and
- modulating (33) the duration of the time lag and maintain the frequency modulation constant in a second dimming range of the LED load (23)

**Patentansprüche**

**1.** Hybrider Schaltwandler (1) für eine LED-Last (23), umfassend

ein erstes Entkopplungselement (11), ein zweites Entkopplungselement (12), ein drittes Entkopplungselement (13) und ein viertes Entkopplungselement (14), die über einen Eingangsanschluss des Wandlers (1) in Reihe geschaltet sind, der an eine Gleichstromquelle (22) anschließbar ist;
ein erstes kapazitives Speicherelement (15), das parallel zu der Reihenschaltung des zweiten Entkopplungselements (12) und des dritten Entkopplungselements (13) geschaltet ist;
eine Reihenschaltung, umfassend ein induktives Speicherelement (16) und ein zweites kapazitives Speicherelement (17), die parallel zu der Reihenschaltung des dritten Entkopplungselements (13) und des vierten Entkopplungselements (14) geschaltet sind, wobei das zweite kapazitive Speicherelement (17) parallel zu einem Ausgangsanschluss des Wandlers (1) geschaltet ist, der mit der LED-Last (23) anschließbar ist; und
eine Steuerlogik (18), die konfiguriert ist zum abwechselnden Öffnen des ersten Entkopplungselements (11) und des zweiten Entkopplungselements (12) gemäß einer Modulationsfrequenz mit einer dazwischenliegenden Zeitverzögerung, in der das erste Entkopplungselement (11) und das zweite Entkopplungselement (12) geschlossen sind; und **dadurch gekennzeichnet, dass** die Steuerlogik ferner konfiguriert ist zum Beibehalten einer Dauer der Zeitverzögerung und linearen Verringern der Modulationsfrequenz in einem ersten Dimmbereich der LED-Last (23); und
Modulieren der Dauer der Zeitverzögerung und Konstanthalten der Frequenzmodulation in einem zweiten Dimmbereich der LED-Last (23).

**2.** Wandler (1) nach Anspruch 1,
das erste Entkopplungselement (11) und das zweite Entkopplungselement (12) jeweils umfassend einen elektronischen Schalter.

**3.** Wandler (1) nach Anspruch 1 oder 2,
das dritte Entkopplungselement (13) und das vierte Entkopplungselement (14) jeweils umfassend einen elektronischen Schalter.

**4.** Wandler (1) nach Anspruch 3,
wobei die Steuerlogik (18) ferner konfiguriert ist, um das dritte Entkopplungselement (13) und/oder das vierte Entkopplungselement (14) in Abhängigkeit von jeweiligen Öffnungszuständen des ersten Entkopplungselements (11) und des zweiten Entkopplungselements (12) zu öffnen.

**5.** Wandler (1) nach Anspruch 1 oder 2,

das dritte Entkopplungselement (13) und das vierte Entkopplungselement (14) jeweils umfassend eine Diode;
wobei die Dioden jeweils angeordnet sind, um ein Kurzschließen der Gleichspannungsquelle zu verhindern.

6. Wandler (1) nach einem der vorstehenden Ansprüche,
wobei der erste Dimmbereich von einer vollen Lichtleistung der LED-Last (23) bis zu einer reduzierten Lichtleistung der LED-Last (23) reicht, die bei einer minimalen Modulationsfrequenz erreicht wird.

7. Wandler (1) nach Anspruch 6,
die minimale Modulationsfrequenz umfassend eine Frequenz, die für das menschliche Ohr unhörbar ist.

8. Wandler (1) nach Anspruch 7,
die minimale Modulationsfrequenz umfassend 30 kHz, mehr bevorzugt 25 kHz und am meisten bevorzugt 20 kHz.

9. Wandler (1) nach einem der Ansprüche 6 bis 8,
wobei der zweite Dimmbereich von der reduzierten Lichtleistung der LED-Last (23) bis zu einer minimalen Lichtleistung der LED-Last (23) reicht, die bei einer minimalen Dauer der Zeitverzögerung erreicht wird.

10. Wandler (1) nach Anspruch 9,
die minimale Lichtleistung der LED-Last (23) umfassend 1 % der vollen Lichtleistung der LED-Last (23).

11. Wandler (1) nach einem der vorstehenden Ansprüche,
wobei die Steuerlogik (18) Teil einer integrierten Schaltung, vorzugsweise einer monolithisch integrierten Schaltung ausbildet.

12. Wandler (1) nach einem der vorstehenden Ansprüche,

wobei die Steuerlogik (18) ferner konfiguriert ist, um das erste Entkopplungselement (11) zu betreiben

- in einem geschlossenen Zustand in einer ersten, zweiten und dritten Phase eines Betriebszyklus des Wandlers (1), und
- in einem geöffneten Zustand in einer vierten Phase des Betriebszyklus;

wobei die Steuerlogik (18) ferner konfiguriert ist, um das zweite Entkopplungselement (12) zu betreiben

- in einem geschlossenen Zustand in der ersten, dritten und vierten Phase des Betriebszyklus und
- in einem geöffneten Zustand in der zweiten Phase des Betriebszyklus;

eine jeweilige Dauer der ersten und der dritten Phase der Zwischenzeitverzögerung entspricht.

13. Beleuchtungssystem (2), umfassend

eine Beleuchtungssammelschiene (21);
eine Gleichstromquelle (22), die konfiguriert ist, um die Beleuchtungssammelschiene (21) mit Gleichstrom zu versorgen; und
eine Anzahl von hybriden Schaltwandlern (1) nach einem der Ansprüche 1 bis 12, wobei jeder jeweilige hybride Schaltwandler (1) konfiguriert ist, um eine jeweilige LED-Last (23) von der Beleuchtungssammelschiene (21) mit Gleichstrom zu versorgen.

14. Verfahren (3) zum Betreiben eines hybriden Schaltwandlers (1) nach einem der Ansprüche 1 bis 12, das Verfahren (3) umfassend

- abwechselndes Öffnen (31) des ersten Entkopplungselements (11) und des zweiten Entkopplungselements (12) mit einer dazwischenliegenden Zeitverzögerung, in der das erste Entkopplungselement (11) und das zweite Entkopplungselement (12) gemäß einer Modulationsfrequenz geschlossen sind; **gekennzeichnet durch**
- Beibehalten (32) einer Dauer der Zeitverzögerung und lineares Verringern der Modulationsfrequenz in einem ersten Dimmbereich der LED-Last (23); und
- Modulieren (33) der Dauer der Zeitverzögerung und Konstanthalten der Frequenzmodulation in einem zweiten Dimmbereich der LED-Last (23).

**Revendications**

1. Convertisseur hybride à découpage (1) pour une charge de DEL (23), comprenant

un premier élément de découpage (11), un deuxième élément de découpage (12), un troisième élément de découpage (13) et un quatrième élément de découpage (14) connectés en série aux bornes d'un port d'entrée du convertisseur (1) pouvant être connecté à une source d'alimentation CC (22) ;
un premier élément de stockage capacitif (15) connecté en parallèle à la connexion en série du deuxième élément de découplage (12) et du troisième élément de découplage (13) ;
une connexion en série comprenant un élément de stockage inductif (16) et un second élément de stockage capacitif (17) connectée en parallèle à la connexion en série du troisième élément de découplage (13) et du quatrième élément de découplage (14), dans lequel le second élément de stockage capacitif (17) est connecté en parallèle à un port de sortie du convertisseur (1) pouvant être connecté à la charge de DEL (23) ; et
une logique de commande (18) étant configurée pour
ouvrir alternativement le premier élément de découplage (11) et le deuxième élément de découplage (12) conformément à une fréquence de modulation avec un décalage temporel intermédiaire dans lequel le premier élément de découplage (11) et le deuxième élément de découplage (12) sont fermés ; et **caractérisé en ce que** la logique de commande est en outre configurée pour conserver une durée du décalage temporel et diminuer linéairement la fréquence de modulation dans une première plage de gradation de la charge de DEL (23) ; et
moduler la durée du décalage temporel et maintenir la modulation de fréquence constante dans une seconde plage de gradation de la charge de DEL (23).

2. Convertisseur (1) selon la revendication 1,
le premier élément de découplage (11) et le deuxième élément de découplage (12) comprenant respectivement un commutateur électronique.

3. Convertisseur (1) selon la revendication 1 ou la revendication 2,
le troisième élément de découplage (13) et le quatrième élément de découplage (14) comprenant respectivement un commutateur électronique.

4. Convertisseur (1) selon la revendication 3,
la logique de commande (18) étant en outre configurée pour ouvrir le troisième élément de découplage (13) et/ou le quatrième élément de découplage (14) en fonction d'états d'ouverture respectifs du premier élément de découplage (11) et du deuxième élément de découplage (12).

5. Convertisseur (1) selon la revendication 1 ou la revendication 2,

le troisième élément de découplage (13) et le quatrième élément de découplage (14) comprenant respectivement une diode ;
les diodes étant respectivement agencées pour empêcher un court-circuit de la source de tension continue.

6. Convertisseur (1) selon l'une quelconque des revendications précédentes,
la première plage de gradation s'étendant d'un rendement lumineux total de la charge de DEL (23) à un rendement lumineux réduit de la charge de DEL (23) obtenu à une fréquence de modulation minimale.

7. Convertisseur (1) selon la revendication 6,
la fréquence de modulation minimale comprenant une fréquence inaudible pour une oreille humaine.

8. Convertisseur (1) selon la revendication 7,
la fréquence de modulation minimale comprenant 30 kHz, plus préférablement 25 kHz, et le plus préférablement 20 kHz.

9. Convertisseur (1) selon l'une quelconque des revendications 6 à 8,
la seconde plage de gradation s'étendant du rendement lumineux réduit de la charge de DEL (23) à un rendement lumineux minimal de la charge de DEL (23) obtenu pendant une durée minimale du décalage temporel.

10. Convertisseur (1) selon la revendication 9,
le rendement lumineux minimal de la charge de DEL (23) comprenant 1 % du rendement lumineux total de la charge de DEL (23).

11. Convertisseur (1) selon l'une quelconque des revendications précédentes,
la logique de commande (18) faisant partie d'un circuit intégré, de préférence un circuit intégré monolithique.

12. Convertisseur (1) selon l'une quelconque des revendications précédentes,

la logique de commande (18) étant en outre configurée pour faire fonctionner le premier élément de découplage (11).

- dans un état fermé dans des première, deuxième et troisième phases d'un cycle de fonctionnement du convertisseur (1), et
- dans un état ouvert dans une quatrième phase du cycle de fonctionnement ;

la logique de commande (18) étant en outre configurée pour faire fonctionner le deuxième élément de découplage (12).

- dans un état fermé dans les première, troisième et quatrième phases du cycle de fonctionnement, et

- dans un état ouvert dans la deuxième phase du cycle de fonctionnement ;

une durée respective des première et troisième phases correspond au décalage temporel intermédiaire.

13. Système d'éclairage (2), comprenant

un bus d'éclairage (21) ;
une source d'alimentation CC (22) configurée pour fournir une puissance CC au bus d'éclairage (21) ; et
un certain nombre de convertisseurs hybrides à découpage (1) selon l'une quelconque des revendications 1 à 12, chaque convertisseur hybride à découpage respectif (1) étant configuré pour fournir une puissance CC à une charge de DEL respective (23) du bus d'éclairage (21).

14. Procédé (3) de fonctionnement d'un convertisseur hybride à découpage (1) selon l'une quelconque des revendications 1 à 12, le procédé (3) comprenant

- l'ouverture alternative (31) du premier élément de découplage (11) et du deuxième élément de découplage (12) avec un décalage temporel intermédiaire : dans lequel le premier élément de découplage (11) et le deuxième élément de découplage (12) sont fermés conformément à une fréquence de modulation ; **caractérisé par**
- la conservation (32) d'une durée du décalage temporel et la diminution linéaire de la fréquence de modulation dans une première plage de gradation de la charge de DEL (23) ; et
- la modulation (33) de la durée du décalage temporel et le maintien de la modulation de fréquence constante dans une seconde plage de gradation de la charge de DEL (23).

FIG. 1

FIG. 2

FIG. 3

FIG. 4

FIG. 5

FIG. 6

*f*

20 kHz

1%   X%                                          100%

Light
output

FIG. 7

*d*

100%

Y%

1%   X%                                          100%

Light
output

FIG. 8

FIG. 9

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• Dimmable integrated CMOS LED driver based on a resonant DC/DC hybrid-switched capacitor converter. **JUAN C CASTELLANOS et al.** INTERNATIONAL JOURNAL OF CIRCUIT THEORY AND APPLICATIONS. JOHN WILEY & SONS, INC, 21 June 2018, vol. 46, 1485-1502